# EUROPÄISCHE PATENTANMELDUNG

(11) **EP 3 118 279 A1**
(43) Veröffentlichungstag der Anmeldung: **18.01.2017**
(21) Anmeldenummer: 15176614.4
(22) Anmeldetag: 14.07.2015
(51) Int. Cl.: C09K 11/06, H01L 51/50, H01L 27/32, H05B 33/08

(54) **VERFAHREN ZUM BETRIEB VON OLEDS ALS LICHTQUELLEN IN FAHRZEUGLEUCHTEN, OLED ALS LICHTQUELLE UMFASSENDES LEUCHTMITTEL UND HIERMIT AUSGESTATTETE FAHRZEUGLEUCHTE**

(71) Anmelder: odelo GmbH, 70329 Stuttgart (DE)
(72) Erfinder: VOLLMER, Marco, 71332 Waiblingen (DE); SCHWENKSCHUSTER, Lukas, 71576 Burgstetten-Erbstetten (DE)
(74) Vertreter: Benninger, Johannes

(57) **Zusammenfassung**

Es werden ein Verfahren zum Betrieb mindestens einer OLED (20) als wenigstens eine Lichtquelle (02) zumindest eines Leuchtmittels (01) einer Fahrzeugleuchte, dessen zumindest eine Lichtquelle (02) mit einer abhängig von einem momentan vorgegebenen Betriebszustand schaltbaren Stromversorgung (03) verbunden ist, welcher momentan vorgegebene Betriebszustand einen Warmzustand oder einen Kaltzustand der zumindest einen Lichtquelle (02) vorsieht, und ein entsprechendes, zur Ausführung des Verfahrens geeignetes Leuchtmittel (01), sowie eine mit einem solchen Leuchtmittel (01) ausgestattete Fahrzeugleuchte beschrieben. Das Verfahren umfasst die Verfahrensschritte:
- Überwachung einer Temperatur mindestens einer als wenigstens eine Lichtquelle (02) des Leuchtmittels (01) vorgesehenen OLED (20),
- Vergleich der bei der Überwachung festgestellten Temperatur mit einem ersten Schwellenwert, wobei der erste Schwellenwert unterhalb einer Temperaturgrenze liegt, bei deren Überschreitung eine sich in einem Warmzustand befindliche OLED (20) eine irreversible Zerstörung erfährt,
- Betrieb der mindestens einen OLED (20) im momentan vorgegebenen Betriebszustand, wenn die bei der Überwachung festgestellte Temperatur den ersten Schwellenwert unterschreitet, und
- zwangsweise Trennung der mindestens einen OLED (20) von der Stromversorgung (03) unabhängig von dem momentan vorgegebenen Betriebszustand, wenn die bei der Überwachung festgestellte Temperatur den ersten Schwellenwert erreicht hat oder überschreitet.

## Beschreibung

Die Erfindung betrifft ein Verfahren gemäß dem Oberbegriff des Anspruchs 1, ein zur Ausführung diesen Verfahrens geeignetes Leuchtmittel gemäß dem Oberbegriff des Anspruchs 8 und eine mit einem solchen Leuchtmittel ausgestattete Fahrzeugleuchte gemäß dem Oberbegriff des Anspruchs 14.

Eine Fahrzeugleuchte umfasst im Wesentlichen einen von einem Leuchtengehäuse und einer Lichtscheibe wenigstens zum Teil umschlossenen Leuchteninnenraum und mindestens ein darin beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer auch als Rücklichtfunktion bezeichneten Schlusslichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Fahrzeugleuchten sind sowohl einer Fahrzeuginnenbeleuchtung und/oder als Leseleuchten dienende Innenraumleuchten, als auch am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Als Lichtquellen kommen in Fahrzeugleuchten Glühlampen, Gasentladungslampen sowie unter anderem wegen ihres geringen Stromverbrauchs und geringen Bauraumbedarfs vermehrt Leuchtdioden zum Einsatz. Letztere bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Fahrzeugleuchten bekannt, in denen reine LED-Chips ohne angeformte Primäroptiken zum Einsatz kommen. Im Folgenden wird deshalb der Einfachheit halber nicht zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Fahrzeugleuchten verwirklicht werden, die an fast jede nur erdenkliche Einbausituation angepasst sein können.

Die Nutzbarmachung der selben Vorteile wie bei der Verwendung von aus anorganischen Halbleiterwerkstoffen hergestellten LEDs als Lichtquellen einhergehend mit dem zusätzlichen Vorteil, homogen leuchtende Flächen zu erzeugen, verspricht die Verwendung organischer Leuchtdioden (Organic Light Emitting Diode; OLED) als Lichtquellen.

Eine OLED ist ein leuchtendes Dünnschichtbauelement aus organischen halbleitenden Materialien mit mindestens einer zwischen elektrisch leitenden, beispielsweise metallischen Schichten für Anode und Kathode eingeschlossen Emitterschicht.

Die Stärke oder anders ausgedrückt Dicke der Schichten liegt in einer Größenordnung von etwa 100 nm. Zum Schutz gegen Wasser, Sauerstoff sowie zum Schutz gegen andere Umwelteinflüsse, wie etwa Kratzbeschädigung und/oder Druckbelastung sind OLEDs typischerweise mit einem anorganischen Material insbesondere mit Glas verkapselt. Zwar gibt es Anstrengungen, das Glas durch Kunststoff zu ersetzen, die jedoch noch nicht vom gewünschten Erfolg gekrönt sind, weil die Dichtigkeit der alternativen Materialien für die Verkapselung nicht ausreichend gut genug ist.

Im Unterschied zu LEDs bedarf die Herstellung von OLEDs keine einkristallinen Materialien. Im Vergleich zu LEDs lassen sich OLEDs daher in kostengünstiger Dünnschichttechnik herstellen. OLEDs ermöglichen dadurch die Herstellung flächiger Lichtquellen, die einerseits sehr dünn und andererseits als durch die Lichtscheibe einer Fahrzeugleuchte hindurch sichtbare leuchtende Fläche eingesetzt einen besonders homogenes Erscheinungsbild aufweisen.

Ein bei der Verwendung von OLEDs als Lichtquellen in Verbindung mit Fahrzeugleuchten auftretender Nachteil ist, dass die Temperaturbelastbarkeit von OLEDs aufgrund deren organischer Materialien sowohl im Warm- als auch im Kaltzustand stark beschränkt ist. Die für OLEDs ertragbaren Höchsttemperaturen sind dabei bei deren Betrieb im so genannten Warmzustand niedriger, als in ausgeschaltetem Zustand im so genannten Kaltzustand. Damit können OLEDs nur innerhalb eingeschränkter Temperaturbereiche betrieben und auch bereitgehalten werden.

Dabei ist ein Betriebstemperaturbereich nach oben hin durch eine erste Temperaturgrenze begrenzt, wohingegen ein Bereithaltungstemperaturbereich durch eine im Vergleich zur ersten Temperaturgrenze höhere zweite Temperaturgrenze begrenzt ist.

Wird die erste Temperaturgrenze bei Betrieb einer OLED - dem so genannten Warmzustand - überschritten, bei welchem Betrieb die OLED unter Lichtabgabe stromdurchflossen ist, führt dies zur irreversiblen Zerstörung der OLED. Wird die zweite Temperaturgrenze bei Nichtbetrieb einer OLED - dem so genannten Kaltzustand - überschritten, bei welchem Nichtbetrieb die OLED weder stromdurchflossen ist, noch Licht abstrahlt, führt dies ebenfalls zur irreversiblen Zerstörung der OLED.

Grundsätzlich weisen LEDs und konventionelle Lichtquellen ebenfalls nach oben hin begrenzte, durch die zu ihrer Herstellung verwendeten Ausgangsmaterialien begrenzte Temperaturbereiche auf, innerhalb derer sie betrieben und bereitgehalten werden können. Diese Temperaturbereiche überschreiten jedoch deutlich die Temperaturgrenzen, bei denen OLEDs irreversible Zerstörungen erfahren.

Insbesondere die erste Temperaturgrenze, bei deren Überschreitung eine OLED bei deren Betrieb irreversibel zerstört wird, liegt dabei in einem Temperaturbereich, wie er beim Einsatz eines Fahrzeugs beispielsweise in heißen Regionen wie etwa unter direkter Sonneneinstrahlung innerhalb einer Fahrzeugleuchte entstehen kann.

Durch DE 10 2006 046 729 A1 und durch US 02002/0130786 A1 ist jeweils eine Abregelung der Versorgungsspannung von LEDs mit zunehmender Temperatur bekannt. Die Abregelung sieht eine linear abnehmende Versorgungsspannung oberhalb einer Schwellentemperatur vor.

Durch EP2355621A2 ist bekannt, in einem ersten, niederen Temperaturintervall eine geringere Stromversorgung einer Lichtquelle bereitzustellen, als in einem zweiten, mittleren Temperaturintervall und schließlich in einem dritten, höchsten Temperaturintervall wieder eine geringere Stromversorgung bereitzustellen.

Eine Aufgabe der Erfindung ist die Bereitstellung eines Verfahrens zum Betrieb von OLEDs als Lichtquellen in Fahrzeugleuchten, welches den zerstörungsfreien Einsatz von OLEDs als Lichtquellen in Fahrzeugleuchten ermöglicht, unter Anderem auch in heißen Regionen auch unter direkter Sonneneinstrahlung betriebenen Fahrzeugen verbauten Fahrzeugleuchten. Ferner ist es eine Aufgabe der Erfindung, ein zur Ausführung eines solchen Verfahrens geeignetes Leuchtmittel und eine mit einem solchen Leuchtmittel ausgestattete Fahrzeugleuchte zu entwickeln.

Die Aufgabe wird jeweils gelöst mit den Merkmalen eines der unabhängigen Ansprüche. Vorteilhafte Ausführungsformen sind in den abhängigen Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach ein Verfahren zum Betrieb mindestens einer OLED als wenigstens eine Lichtquelle zumindest eines Leuchtmittels einer Fahrzeugleuchte.

Das Verfahren sieht eine Überwachung einer Temperatur mindestens einer als wenigstens eine Lichtquelle zumindest eines Leuchtmittels vorgesehenen OLED vor.

Grundsätzlich kann eine Überwachung einer Temperatur mindestens einer als wenigstens eine Lichtquelle zumindest eines Leuchtmittels vorgesehenen OLED erfolgen, indem eine Temperatur erfasst wird, von welcher Temperatur aus auf die Temperatur der OLED rückgeschlossen werden kann.

Die Überwachung der Temperatur erfolgt beispielsweise durch Erfassung einer Temperatur der OLED und/oder einer Temperatur einer unmittelbaren Umgebung mindestens einer als wenigstens eine Lichtquelle zumindest eines Leuchtmittels vorgesehenen OLED und/oder durch Erfassung mindestens einer einer Temperatur der OLED und/oder einer Temperatur einer unmittelbaren Umgebung der OLED proportionalen Größe.

Eine denkbare Größe ist beispielsweise ein bei konstanter Spannung durch ein Elektronikbauteil des Leuchtmittels fließender, sich mit verändernder Temperatur verändernder Strom und/oder eine sich bei konstantem durch ein Elektronikbauteil des Leuchtmittels fließendem Strom mit verändernder Temperatur verändernde Spannung. Auch die Messung eines sich mit verändernder Temperatur verändernden Widerstands, sei es ein induzierter oder ein ohmscher Widerstand, eines Elektronikbauteils eignet sich grundsätzlich als Größe zur Erfassung einer Temperatur.

Bei dem Elektronikbauteil kann es sich um einen Temperatursensor, einen Widerstand, ein Halbleiterbauelement oder gar um eine Lichtquelle, beispielsweise eine LED oder eine OLED, des Leuchtmittels handeln, um nur einige denkbare Ausgestaltungen zu nennen. Beispielsweise eignet sich eine Strom- und/oder Spannungskurve einer LED und/oder einer OLED ebenfalls, um anhand der erfassten Werte für den Strom und/oder die Spannung auf die momentan vorherrschende Temperatur rückzuschließen, welche die LED und/oder die OLED gerade erfährt bzw. welcher die LED und/oder die OLED gerade ausgesetzt ist.

So sind beispielsweise zur Erfassung einer Temperatur Temperatursensoren bekannt, welche ihren Widerstand verändern, wie etwa so genannte Heißleiter oder Kaltleiter, oder welche direkt ein verarbeitbares elektrisches Signal liefern, wie etwa Halbleiter-Temperatursensoren , die einen zu ihrer Temperatur proportionalen Strom oder eine zu ihrer Temperatur proportionale Spannung oder ein von ihrer Temperatur abhängiges digitales Signal liefern. So sinkt beispielsweise die Basis-Emitter-Spannung eines als Diode geschalteten Transistors mit steigender Temperatur.

Das Verfahren sieht außerdem vor, die bei der Überwachung festgestellte Temperatur mit einem ersten Schwellenwert zu vergleichen. Das Verfahren sieht hierbei vor, dass der erste Schwellenwert unterhalb einer Temperaturgrenze liegt, bei deren Überschreitung eine sich im Warmzustand befindliche OLED eine irreversible Zerstörung erfährt.

Schließlich sieht das Verfahren vor, wenn:
- die bei der Überwachung festgestellte Temperatur den ersten Schwellenwert überschreitet, die OLED unabhängig von einem momentan vorgegebenen Betriebszustand von der Stromversorgung zwangsweise zu trennen, und
- die bei der Überwachung festgestellte Temperatur den ersten Schwellenwert unterschreitet, die zwangsweise Trennung der Stromversorgung aufzuheben und die OLED in einen momentan vorgegebenen Betriebszustand, bei dem die OLED entweder von der Stromversorgung getrennt oder die Stromversorgung aufgeschaltet ist, zu entlassen.

Das Verfahren kann ferner eine Überwachung eines vorgegebenen Betriebszustands mindestens einer als wenigstens eine Lichtquelle zumindest eines Leuchtmittels vorgesehenen OLED vorsehen, wobei zwischen einem Warmzustand, bei dem eine Stromversorgung der OLED aufgeschaltet ist und die OLED bevorzugt unter Lichtabgabe stromdurchflossen ist, und einem Kaltzustand, bei dem eine Stromversorgung der OLED getrennt und/oder abgeschaltet ist und die OLED weder stromdurchflossen ist, noch Licht abstrahlt, unterschieden wird.

Bei dem vorgegebenen Betriebszustand handelt es sich um einen beispielsweise durch einen momentanen Fahrzustand eines Fahrzeugs und/oder ein Steuergerät und/oder eine Elektronikschaltung vorgegebenen, zwischen Warm- und Kaltzustand veränderlichen, momentan für die OLED vorgesehenen Betriebszustand. Der vorgegebene Betriebszustand sieht momentan einen Warmzustand oder einen Kaltzustand der OLED vor.

Durch die Überwachung des momentan vorgegebenen Betriebszustands kann das Verfahren vorsehen, wenn:
- die bei der Überwachung festgestellte Temperatur den ersten Schwellenwert überschreitet und der überwachte, vorgegebene Betriebszustand den Warmzustand der OLED vorsieht, die OLED von der Stromversorgung zwangsweise zu trennen und in den Kaltzustand zu versetzen,
- die bei der Überwachung festgestellte Temperatur den ersten Schwellenwert überschreitet und der überwachte, vorgegebene Betriebszustand den Kaltzustand der OLED vorsieht, die OLED im Kaltzustand zu belassen und eine Aufschaltung der Stromversorgung der OLED zwangsweise zu unterbinden, und
- die bei der Überwachung festgestellte Temperatur den ersten Schwellenwert unterschreitet, die zwangsweise Trennung und/oder zwangsweise Unterbindung aufzuheben und die OLED in den überwachten, momentan vorgegebenen Betriebszustand, bei dem die OLED entweder von der Stromversorgung getrennt oder die Stromversorgung aufgeschaltet ist, zu entlassen.

Die Erfindung erlaubt einen Schutz von als Lichtquellen in Fahrzeugleuchten verwendeten OLEDs vor einer Zerstörung durch Überhitzung.

Insbesondere schafft die Erfindung eine Umgehung des bestehenden Problems, wonach die gesetzlichen Regelungen für die Zulassung im Straßenverkehr keine aktive Abregelung mit abnehmender Stromversorgung bei zunehmender Betriebstemperatur erlauben. Lichtquelleneigene Veränderungen der Stromversorgung einhergehend mit einer Abnahme der Lichtabgabe hingegen sind zulässig, beispielsweise wenn eine Lichtquelle durch zunehmende Betriebstemperatur einen Anstieg deren inneren Widerstands aufweist. Demgegenüber verstößt ein Lichtquellendefekt einhergehend mit einem Ausfall der Lichtabgabe nicht gegen die gesetzlichen Regelungen.

Um OLEDs vor einer Überhitzung und damit vor einer Zerstörung zu schützen, sieht die Erfindung ein hartes Abschalten von OLEDs oberhalb einer ersten Schwellentemperatur vor, die unterhalb deren im Betrieb ertragbaren ersten Temperaturgrenze liegt.

Um eine flackernde Lichtabgabe durch ständiges Ein- und Ausschalten der OLED zu vermeiden, kann das Verfahren die Aufhebung der zwangsweisen Trennung und/oder zwangsweisen Unterbindung einhergehend mit einer Entlassung der OLED in einen momentan vorgegebenen Betriebszustand und damit ein Wiedereinschalten der OLED bei einem momentanen vorgegebenen Betriebszustand, der einen Warmzustand der OLED vorsieht, erst ab einer zweiten Schwellentemperatur vorsehen, die unterhalb der ersten Schwellentemperatur liegt, beispielsweise um deutliche 5° unter der ersten Schwellentemperatur.

Hierzu kann das Verfahren zusätzlich vorsehen, die OLED erst dann wieder in den momentan vorgegebenen Betriebszustand, bei dem die OLED entweder von der Stromversorgung getrennt oder die Stromversorgung aufgeschaltet ist, zu entlassen, wenn die bei der Überwachung festgestellte Temperatur den ersten Schwellenwert unterschreitet und kleiner oder gleich dem zweiten Schwellenwert ist.

Es ist ersichtlich, dass die Erfindung durch ein hartes Abschalten einer OLED bei Erreichen einer Schwellentemperatur verwirklicht sein kann.

Ein zweiter Gegenstand der Erfindung betrifft ein Leuchtmittel für eine Fahrzeugleuchte.

Das Leuchtmittel weist mindestens eine OLED als wenigstens eine Lichtquelle auf.

Das Leuchtmittel weist Mittel zur Überwachung der Temperatur mindestens einer als Lichtquelle vorgesehenen OLED auf.

Die Mittel zur Überwachung der Temperatur mindestens einer als Lichtquelle vorgesehenen OLED umfassen beispielsweise Mittel zur Erfassung einer Temperatur, welche einen Rückschluss auf die Temperatur der OLED zulässt, beispielsweise durch unmittelbare Erfassung der Temperatur der OLED oder einer der OLED proportionalen Temperatur.

Die Mittel zur Überwachung der Temperatur können beispielsweise der Erfassung einer Temperatur der OLED und/oder einer Temperatur einer unmittelbaren Umgebung mindestens einer als wenigstens eine Lichtquelle zumindest eines Leuchtmittels vorgesehenen OLED dienen.

Grundsätzlich kann demnach eine Überwachung einer Temperatur mindestens einer als wenigstens eine Lichtquelle zumindest eines Leuchtmittels vorgesehenen OLED erfolgen, indem eine Temperatur erfasst wird, von welcher Temperatur aus auf die Temperatur der OLED rückgeschlossen werden kann.

Alternativ oder zusätzlich können die Mittel zur Überwachung der Temperatur mindestens einer als Lichtquelle vorgesehenen OLED der Erfassung mindestens einer einer Temperatur der OLED und/oder einer Temperatur einer unmittelbaren Umgebung der OLED proportionalen Größe dienen.

Eine denkbare Größe ist beispielsweise ein bei konstanter Spannung durch ein Elektronikbauteil des Leuchtmittels fließender, sich mit verändernder Temperatur verändernder Strom und/oder eine sich bei konstantem durch ein Elektronikbauteil des Leuchtmittels fließendem Strom mit verändernder Temperatur verändernde Spannung. Auch die Messung eines sich mit verändernder Temperatur verändernden Widerstands, sei es ein induzierter oder ein ohmscher Widerstand, eines Elektronikbauteils eignet sich grundsätzlich als Größe zur Erfassung einer Temperatur.

Bei dem Elektronikbauteil kann es sich um einen Temperatursensor, einen Widerstand, ein Halbleiterbauelement oder gar um eine Lichtquelle, beispielsweise eine LED oder eine OLED, des Leuchtmittels handeln, um nur einige denkbare Ausgestaltungen zu nennen. Beispielsweise eignet sich eine Strom- und/oder Spannungskurve einer LED und/oder einer OLED ebenfalls, um anhand der erfassten Werte für den Strom und/oder die Spannung auf die momentan vorherrschende Temperatur rückzuschließen, welche die LED und/oder die OLED gerade erfährt bzw. welcher die LED und/oder die OLED gerade ausgesetzt ist.

So sind beispielsweise zur Erfassung einer Temperatur Temperatursensoren bekannt, welche ihren Widerstand verändern, wie etwa so genannte Heißleiter oder Kaltleiter, oder welche direkt ein verarbeitbares elektrisches Signal liefern, wie etwa Halbleiter-Temperatursensoren , die einen zu ihrer Temperatur proportionalen Strom oder eine zu ihrer Temperatur proportionale Spannung oder ein von ihrer Temperatur abhängiges digitales Signal liefern. So sinkt beispielsweise die Basis-Emitter-Spannung eines als Diode geschalteten Transistors mit steigender Temperatur.

Die Mittel zur Überwachung der Temperatur mindestens einer als Lichtquelle vorgesehenen OLED können Mittel zur Erfassung einer oder mehrerer und/oder eine Kombination zuvor genannter Größen umfassen und/oder sie können eines oder mehrere und/oder eine Kombination der erwähnten Elektronikbauteile umfassen und/oder sie können einen oder mehrere Temperatursensoren, wie etwa einen oder mehrere und/oder eine Kombination der zuvor genannten Temperatursensoren umfassen.

Das Leuchtmittel verfügt außerdem über Mittel zum Vergleich der bei der Überwachung festgestellten Temperatur mit einem ersten Schwellenwert, der unterhalb einer Temperaturgrenze liegt, bei deren Überschreitung eine sich im Warmzustand befindliche OLED eine irreversible Zerstörung erfährt.

Die Mittel zum Vergleich der bei der Überwachung festgestellten Temperatur mit dem ersten Schwellenwert sehen vor, ein Steuersignal zu erzeugen, welches wenn:
- die bei der Überwachung festgestellte Temperatur den ersten Schwellenwert überschreitet, die Stromversorgung der mindestens einen als wenigstens eine Lichtquelle des Leuchtmittels vorgesehenen OLED zwangsweise trennt, um so, wenn ein momentan vorgegebener Betriebszustand den Warmzustand der OLED vorsieht, die OLED in den Kaltzustand zu versetzen, und um so, wenn ein momentan vorgegebener Betriebszustand den Kaltzustand der OLED vorsieht, die OLED im Kaltzustand zu belassen und eine Aufschaltung der Stromversorgung der OLED zwangsweise zu unterbinden, wodurch diese nicht aus dem Kalt- in den Warmzustand versetzt werden kann, und
- die bei der Überwachung festgestellte Temperatur den ersten Schwellenwert unterschreitet, die Stromversorgung der mindestens einen als wenigstens eine Lichtquelle des Leuchtmittels vorgesehenen OLED belässt, beispielsweise beibehält oder wiederherstellt, um so die OLED in den momentan vorgegebenen Betriebszustand, bei dem sich die OLED entweder im Kaltzustand oder im Warmzustand befindet, zu entlassen.

Ferner weist das Leuchtmittel Mittel zur Beeinflussung der Stromversorgung wenigstens einer als Lichtquelle des Leuchtmittels vorgesehenen OLED anhand des Steuersignals auf.

Beispielsweise können die Mittel zur Beeinflussung der Stromversorgung wenigstens einer als Lichtquelle des Leuchtmittels vorgesehenen OLED einen in einer Versorgungsleitung zu der mindestens einen als wenigstens eine Lichtquelle des Leuchtmittels vorgesehenen OLED angeordneten, vermittels eines Steuersignals betätigbaren Schalter umfassen.

Das Leuchtmittel kann darüber hinaus Mittel zur Überwachung eines vorgegebenen Betriebszustands mindestens einer als wenigstens eine Lichtquelle des Leuchtmittels vorgesehenen OLED aufweisen. Die Mittel zur Überwachung eines vorgegebenen Betriebszustands unterscheiden hierbei zwischen einem Warmzustand, bei dem eine Stromversorgung der OLED aufgeschaltet ist und die OLED bevorzugt unter Lichtabgabe stromdurchflossen ist, und einem Kaltzustand, bei dem eine Stromversorgung der OLED getrennt und/oder abgeschaltet ist und die OLED weder stromdurchflossen ist, noch Licht abstrahlt.

Bei dem vorgegebenen Betriebszustand handelt es sich um einen beispielsweise durch einen momentanen Fahrzustand eines Fahrzeugs und/oder ein Steuergerät und/oder eine Elektronikschaltung vorgegebenen, zwischen Warm- und Kaltzustand veränderlichen, momentan für die OLED vorgesehenen Betriebszustand. Der vorgegebene Betriebszustand sieht momentan einen Warmzustand oder einen Kaltzustand der OLED vor.

Die Mittel zur Überwachung eines vorgegebenen Betriebszustands erlauben eine Softwaresteuerung des Leuchtmittels anhand eines zuvor beschriebenen Verfahrens. Die Mittel zur Beeinflussung der Stromversorgung wenigstens einer als Lichtquelle des Leuchtmittels vorgesehenen OLED können hierbei Programmmittel umfassen, die beispielsweise von einem Mikroprozessor ausgeführt anhand des beispielsweise digitalen Steuersignals zwischen Warm- und Kaltzustand der mindestens einen OLED abhängig von der erfassten Temperatur, dem Temperaturvergleich und dem momentan vorgegebenen Betriebszustand wechseln.

Um eine flackernde Lichtabgabe durch ständiges Ein- und Ausschalten der OLED zu vermeiden, können die Mittel zum Vergleich der bei der Überwachung festgestellten Temperatur mit einem ersten Schwellenwert, der unterhalb einer Temperaturgrenze liegt, bei deren Überschreitung eine sich im Warmzustand befindliche OLED eine irreversible Zerstörung erfährt, zusätzlich zum Vergleich der bei der Überwachung festgestellten Temperatur mit einem zweiten Schwellenwert, der eine deutlich, zumindest um 5° niedrigere Temperatur, als der erste Schwellenwert vorsieht, vorgesehen sein.

Die Mittel zum Vergleich der bei der Überwachung festgestellten Temperatur mit dem ersten Schwellenwert sehen bei dieser Ausgestaltung vor, ein Steuersignal zu erzeugen, welches wenn:
- die bei der Überwachung festgestellte Temperatur den ersten Schwellenwert überschreitet, die Stromversorgung der mindestens einen als wenigstens eine Lichtquelle des Leuchtmittels vorgesehenen OLED zwangsweise trennt, um so, wenn ein momentan vorgegebener Betriebszustand den Warmzustand der OLED vorsieht, die OLED in den Kaltzustand zu versetzen, und um so, wenn ein momentan vorgegebener Betriebszustand den Kaltzustand der OLED vorsieht, die OLED im Kaltzustand zu belassen und eine Aufschaltung der Stromversorgung der OLED zwangsweise zu unterbinden, wodurch diese nicht aus dem Kalt- in den Warmzustand versetzt werden kann, und
- die bei der Überwachung festgestellte Temperatur den zweiten Schwellenwert erreicht oder unterschreitet, die Stromversorgung der mindestens einen als wenigstens eine Lichtquelle des Leuchtmittels vorgesehenen OLED belässt, beispielsweise beibehält oder wiederherstellt, um so die OLED in den momentan vorgegebenen Betriebszustand, bei dem sich die OLED entweder im Kaltzustand oder im Warmzustand befindet, zu entlassen.

Hierdurch wird die OLED erst dann wieder in den momentan vorgegebenen Betriebszustand, bei dem die OLED entweder von der Stromversorgung getrennt oder die Stromversorgung aufgeschaltet ist, entlassen, wenn die bei der Überwachung festgestellte Temperatur den ersten Schwellenwert unterschreitet und kleiner oder gleich dem zweiten Schwellenwert ist.

Damit erfolgt ein Einschalten oder Wiedereinschalten der OLED bei einem momentanen vorgegebenen Betriebszustand, der einen Warmzustand der OLED vorsieht, erst ab der zweiten Schwellentemperatur, die unterhalb der ersten Schwellentemperatur liegt, beispielsweise um deutliche 5° unter der ersten Schwellentemperatur.

Ein dritter Gegenstand der Erfindung betrifft eine Fahrzeugleuchte mit zumindest einem zuvor beschriebenen Leuchtmittel.

Die Fahrzeugleuchte kann einen von einem Leuchtengehäuse und einer Lichtscheibe ganz oder teilweise umschlossenen Leuchteninnenraum aufweisen, der das mindestens eine Leuchtmittel beherbergt.

Wichtig ist hervorzuheben, dass die erfindungsgemäße Fahrzeugleuchte einzelne Merkmale oder eine beliebige Kombination von zwei oder mehreren Merkmalen eines zuvor beschriebenen erfindungsgemäßen Leuchtmittels und/oder eines zuvor beschriebenen erfindungsgemäßen Verfahrens aufweisen und/oder verwirklichen kann, ebenso wie das erfindungsgemäße Leuchtmittel einzelne Merkmale oder eine beliebige Kombination von zwei oder mehreren Merkmalen einer zuvor beschriebenen erfindungsgemäßen Fahrzeugleuchte und/oder eines zuvor beschriebenen erfindungsgemäßen Verfahrens aufweisen und/oder verwirklichen kann. Darüber hinaus kann das zuvor beschriebene erfindungsgemäße Verfahren einzelne Merkmale oder eine beliebige Kombination von zwei oder mehreren Merkmalen einer zuvor beschriebenen erfindungsgemäßen Fahrzeugleuchte und/oder eines zuvor beschriebenen erfindungsgemäßen Leuchtmittels aufweisen und/oder verwirklichen.

Ebenfalls wichtig ist hervorzuheben, dass das erfindungsgemäße Verfahren und/oder das erfindungsgemäße Leuchtmittel und/oder die erfindungsgemäße Fahrzeugleuchte alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen können.

Ebenso wie die erfindungsgemäße Fahrzeugleuchte es erlaubt, die Vorteile des erfindungsgemäßen Leuchtmittels und/oder des erfindungsgemäßen Verfahrens zu nutzen, erlaubt auch das erfindungsgemäße Leuchtmittel, sämtliche Vorteile der erfindungsgemäßen Fahrzeugleuchte und/oder des erfindungsgemäßen Verfahrens nutzbar zu machen, genauso wie auch das erfindungsgemäße Verfahren es erlaubt, sämtliche Vorteile der erfindungsgemäßen Fahrzeugleuchte und/oder des erfindungsgemäßen Leuchtmittels nutzbar zu machen.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: ein Ablaufdiagramm eines erfindungsgemäßen Verfahrens.
- Fig. 2: ein Schaltbild eines ersten Ausführungsbeispiels eines erfindungsgemäßen Leuchtmittels.
- Fig. 3: ein Schaltbild eines zweiten Ausführungsbeispiels eines erfindungsgemäßen Leuchtmittels mit integrierter, schaltbarer Stromversorgung.

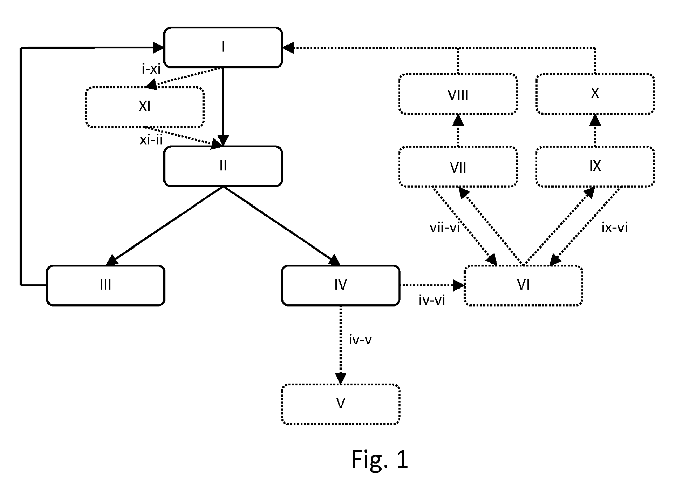

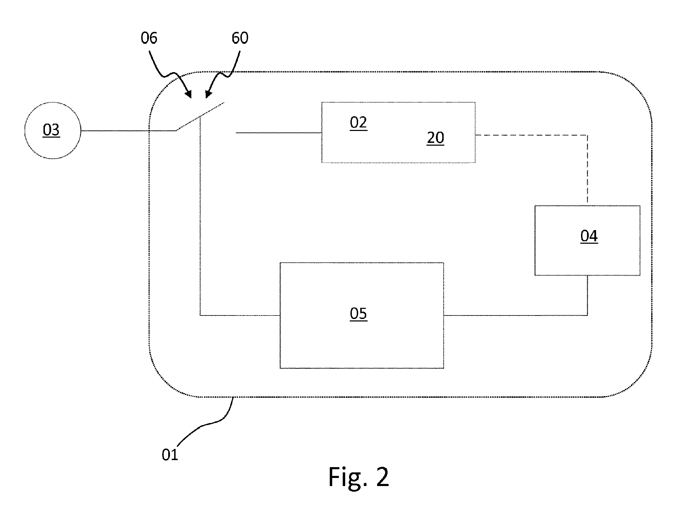

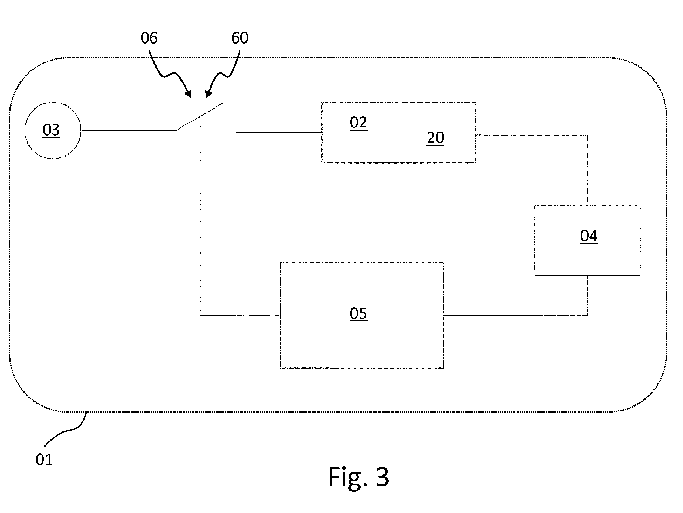

Ein in Fig. 1 in seinem Ablauf ganz oder in Teilen dargestelltes Verfahren zum Betrieb mindestens einer als wenigstens eine Lichtquelle 02 zumindest eines in Fig. 2 oder in Fig. 3 ganz oder in Teilen dargestellten Leuchtmittels 01 einer Fahrzeugleuchte dienenden OLED 20, dessen zumindest eine Lichtquelle 02 mit einer abhängig von einem momentan vorgegebenen Betriebszustand schaltbaren Stromversorgung verbunden oder verbindbar ist, welcher momentan vorgegebene Betriebszustand einen Warmzustand, bei dem die zumindest eine Lichtquelle 02 unter Lichtabstrahlung stromdurchflossen ist, oder einen Kaltzustand, bei dem die zumindest eine Lichtquelle 02 frei von einem Stromdurchfluss ist und keine Lichtabstrahlung aufweist, vorsieht, umfasst mehrere Verfahrensschritte.

Bei dem vorgegebenen Betriebszustand handelt es sich um einen beispielsweise durch einen momentanen Fahrzustand eines Fahrzeugs und/oder ein Steuergerät und/oder eine Elektronikschaltung vorgegebenen, zwischen Warm- und Kaltzustand veränderlichen, momentan für die wenigstens eine Lichtquelle 02 des Leuchtmittels 01 vorgesehenen Betriebszustand. Der vorgegebene Betriebszustand sieht momentan einen Warmzustand oder einen Kaltzustand der wenigstens einen Lichtquelle 02 des Leuchtmittels 01 vor.

Ein erster Verfahrensschritt I sieht eine Überwachung einer Temperatur mindestens einer als wenigstens eine Lichtquelle des Leuchtmittels vorgesehenen OLED 20 vor. Die Überwachung kann kontinuierlich oder in diskreten Zeitabständen erfolgen, beispielsweise in einem Sekundentakt. Die Zeitabstände sind klein genug gewählt, dass die Temperatur der OLED 20, selbst wenn diese zwischen zwei Zeitabständen die erste Schwellentemperatur überschreiten würde, bis zur nächsten Temperaturerfassung eine Temperaturgrenze nicht überschreiten kann, bei der die OLED 20 im Warmzustand eine irreversible Schädigung erfahren würde.

Ein auf den ersten Verfahrensschritt I folgender, zweiter Verfahrensschritt II sieht einen Vergleich der bei der Überwachung festgestellten Temperatur mit einem ersten Schwellenwert vor. Dieser erste Schwellenwert gibt eine erste Temperatur vor oder entspricht einer ersten Temperatur, die unterhalb der zuvor erwähnten Temperaturgrenze liegt, bei deren Überschreitung eine sich in einem Warmzustand befindliche OLED 20 eine irreversible Zerstörung erfährt.

Ein dritter Verfahrensschritt III folgt auf den zweiten Verfahrensschritt II, wenn die bei der Überwachung festgestellte Temperatur den ersten Schwellenwert unterschreitet. Ist das Ergebnis des im zweiten Verfahrensschritt II vorgenommenen Vergleichs, dass die bei der Überwachung festgestellte Temperatur kleiner ist, als der erste Schwellenwert, so folgt auf den zweiten Verfahrensschritt II der dritte Verfahrensschritt III, der einen Betrieb der mindestens einen OLED 20 im momentan vorgegebenen Betriebszustand vorsieht. Tritt der dritte Verfahrensschritt III ein und sieht der veränderliche, momentan vorgegebene Betriebszustand einen Warmzustand der wenigstens einen Lichtquelle 02 des Leuchtmittels 01 vor, ist die schaltbare Stromversorgung aufgeschaltet und die wenigstens eine Lichtquelle 02 des Leuchtmittels 01 ist stromdurchflossen und strahlt Licht ab. Tritt der dritte Verfahrensschritt III ein und sieht der veränderliche, momentan vorgegebene Betriebszustand einen Kaltzustand der wenigstens einen Lichtquelle 02 des Leuchtmittels 01 vor, ist die schaltbare Stromversorgung abgeschaltet und die wenigstens eine Lichtquelle 02 des Leuchtmittels 01 ist weder stromdurchflossen, noch strahlt sie Licht ab.

Nach Durchlaufen des dritten Verfahrensschritts III folgt wieder der erste Verfahrensschritt I, wodurch sich das Verfahren zyklisch wiederholt.

Anstelle des dritten Verfahrensschritts III folgt auf den zweiten Verfahrensschritt II ein vierter Verfahrensschritt IV, wenn die bei der Überwachung festgestellte Temperatur den ersten Schwellenwert erreicht oder überschreitet. Ist das Ergebnis des im zweiten Verfahrensschritt II vorgenommenen Vergleichs, dass die bei der Überwachung festgestellte Temperatur den ersten Schwellenwert erreicht hat oder überschritten hat, so folgt auf den zweiten Verfahrensschritt II der vierte Verfahrensschritt IV, der eine zwangsweise Trennung der mindestens einen als wenigstens eine Lichtquelle 02 des Leuchtmittels 01 vorgesehenen OLED 20 von der Stromversorgung 03 unabhängig von dem momentan vorgegebenen Betriebszustand vorsieht. Sieht der veränderliche, momentan vorgegebene Betriebszustand einen Warmzustand der wenigstens einen Lichtquelle 02 des Leuchtmittels 01 vor, bei dem die schaltbare Stromversorgung 03 aufgeschaltet ist, wird die mindestens eine als OLED 20 ausgeführte Lichtquelle 02 des Leuchtmittels 01 durch die im vierten Verfahrensschritt IV erfolgende Zwangstrennung in den Kaltzustand versetzt, unabhängig vom momentan vorgegebenen Betriebszustand. Gegebenenfalls weitere, nicht als OLEDs ausgeführte Lichtquellen 02 des Leuchtmittels 01 verbleiben hingegen mit der aufgeschalteten, schaltbaren Stromversorgung 03 verbunden und dadurch im Warmzustand. Sieht der veränderliche, momentan vorgegebene Betriebszustand einen Kaltzustand der wenigstens einen Lichtquelle 02 des Leuchtmittels 01 vor, bei dem die schaltbare Stromversorgung 03 abgeschaltet ist, verbleibt die mindestens eine als OLED 20 ausgeführte Lichtquelle 02 des Leuchtmittels 01 durch die im vierten Verfahrensschritt IV erfolgende Zwangstrennung im Kaltzustand und deren Versetzen in den Warmzustand bei einer Änderung des momentan vorgegebenen Betriebszustands von einem Kalt- in einen Warmzustand wird verhindert, ohne dass gegebenenfalls weitere, nicht als OLEDs ausgeführte Lichtquellen 02 des Leuchtmittels 01 hiervon betroffen wären. Dadurch können bei einer Änderung des momentan vorgegebenen Betriebszustands von einem Kalt- in einen Warmzustand gegebenenfalls weitere, nicht als OLEDs ausgeführte Lichtquellen 02 des Leuchtmittels 01 nach wie vor durch eine Aufschaltung der schaltbaren Stromversorgung 03 aus dem Kalt- in den Warmzustand wechseln. Die im vierten Verfahrensschritt IV erfolgende zwangsweise Trennung versetzt damit nur die mindestens eine als wenigstens eine Lichtquelle 02 des Leuchtmittels 01 vorgesehene OLED 20 in den Kaltzustand oder verhindert deren Versetzung aus dem Kalt- in den Warmzustand.

Wichtig ist hervorzuheben, dass die zwangsweise Trennung der mindestens einen als wenigstens eine Lichtquelle 02 des Leuchtmittels 01 vorgesehenen OLED 20 von der Stromversorgung 03 unabhängig von dem momentan vorgegebenen Betriebszustand sowohl eine galvanische Trennung der OLED-Kontakte umfassen kann, oder alternativ oder zusätzlich eine Sperrung des Stromdurchflusses auf einem kleinstmöglichen Niveau vorsehen kann. In Elektronikschaltungen werden im Allgemeinen keine galvanische Trennungen vorgenommen, sondern mittels eines oder mehrerer Halbleiterbauelemente, wie beispielsweise Transistoren, verwirklichte Schalter vorgesehen, welche auch in getrenntem, ausgeschalteten Zustand einen Minimalstrom passieren lässt. Der Ausdruck einer zwangsweisen Trennung umfasst daher auch eine Verringerung des Stromdurchflusses auf einen Minimaldurchlassstrom, etwa anhand eines mittels eines Halbleiterbauelements verwirklichten Schalters.

Nach dem vierten Verfahrensschritt IV kann das Verfahren in einem fünften Verfahrensschritt V enden, wie in Fig. 1 gestrichelt durch den Pfeil iv-v angedeutet. Ein Neustart des Verfahrens erfolgt dann, wenn ein mit einer mit einem ein entsprechendes Verfahren ausführenden Leuchtmittel 01 ausgestattete Fahrzeugleuchte versehenes Fahrzeug durch Abstellen und wiederanstellen dessen Zündung und/oder durch Verschließen und Wiederöffnen beispielsweise dessen Türverriegelung erneut benutzt wird und einen erneuten Benutzungszyklus erfährt. Diese Ausgestaltung des Verfahrens ist vorteilhaft in Verbindung mit solchen in Fahrzeugen verbauten Steuergeräten, die einen Ausfall oder Teilausfall eines Leuchtmittels erfassen und danach jedoch die Stromversorgung diesen Leuchtmittels stilllegen.

Anstelle dass das Verfahren nach dem vierten Verfahrensschritt IV in einem fünften Verfahrensschritt V endet, kann vorgesehen sein, dass auf den vierten Verfahrensschritt IV wie durch den Pfeil iv-vi angedeutet ein sechster Verfahrensschritt VI folgt, der eine erneute Überwachung einer Temperatur mindestens einer als wenigstens eine Lichtquelle des Leuchtmittels vorgesehenen OLED 20 vorsieht. Auch diese Überwachung kann kontinuierlich oder in diskreten Zeitabständen erfolgen, beispielsweise in einem Sekundentakt.

Auf diesen sechsten Verfahrensschritt VI folgt ein siebter Verfahrensschritt VII, bei dem ein Vergleich der bei der Überwachung im sechsten Verfahrensschritt VI festgestellten Temperatur mit dem ersten Schwellenwert erfolgt. Ist das Ergebnis diesen im siebten Verfahrensschritt VII ausgeführten Vergleichs, dass die bei der Überwachung im sechsten Verfahrensschritt VI festgestellte Temperatur gleich oder niedriger ist, als der erste Schwellenwert, so folgt auf den siebten Verfahrensschritt VII ein achter Verfahrensschritt VIII. Dieser achte Verfahrensschritt VIII sieht vor, dass nach einer vorangehenden zwangsweisen Trennung der mindestens einen als wenigstens eine Lichtquelle 02 des Leuchtmittels 01 vorgesehenen OLED 20 von der Stromversorgung 03 eine Wiederaufhebung der zwangsweisen Trennung der mindestens einen OLED 20 von der Stromversorgung 03 unter Entlassung der OLED 20 in den momentan vorgegebenen Betriebszustand erfolgt. Im Anschluss an den achten Verfahrensschritt VIII folgt wieder der erste Verfahrensschritt I, wodurch sich das Verfahren zyklisch wiederholt. Ist das Ergebnis diesen im siebten Verfahrensschritt VII ausgeführten Vergleichs, dass die bei der Überwachung im sechsten Verfahrensschritt VI festgestellte Temperatur nach wie vor höher ist, als der erste Schwellenwert, so werden der sechste Verfahrensschritt VI und der siebte Verfahrensschritt VII wie durch den gestrichelten Pfeil vii-vi angedeutet so lange wiederholt, bis die im sechsten Verfahrensschritt VI festgestellte Temperatur gleich oder niedriger ist, als der erste Schwellenwert.

Alternativ zum siebten Verfahrensschritt VII und dem auf diesen folgenden achten Verfahrensschritt VIII kann auf den sechsten Verfahrensschritt VI ein neunter Verfahrensschritt IX folgen, bei dem ein Vergleich der bei der Überwachung im sechsten Verfahrensschritt VI festgestellten Temperatur mit einem zweiten Schwellenwert erfolgt, welcher niedriger ist, als der erste Schwellenwert. Ist das Ergebnis diesen im neunten Verfahrensschritt IX ausgeführten Vergleichs, dass die bei der Überwachung im sechsten Verfahrensschritt VI festgestellte Temperatur gleich oder niedriger ist, als der zweite Schwellenwert, so folgt auf den neunten Verfahrensschritt IX ein zehnter Verfahrensschritt X. Dieser zehnte Verfahrensschritt X sieht vor, dass nach einer vorangehenden zwangsweisen Trennung der mindestens einen als wenigstens eine Lichtquelle 02 des Leuchtmittels 01 vorgesehenen OLED 20 von der Stromversorgung 03 eine Wiederaufhebung der zwangsweisen Trennung der mindestens einen OLED 20 von der Stromversorgung 03 unter Entlassung der OLED 20 in den momentan vorgegebenen Betriebszustand erfolgt. Im Anschluss an den zehnten Verfahrensschritt X folgt ebenfalls wieder der erste Verfahrensschritt I, wodurch sich das Verfahren zyklisch wiederholt. Ist das Ergebnis diesen im neunten Verfahrensschritt IX ausgeführten Vergleichs, dass die bei der Überwachung im sechsten Verfahrensschritt VI festgestellte Temperatur höher ist, als der zweite Schwellenwert, so werden der sechste Verfahrensschritt VI und der neunte Verfahrensschritt IX wie durch den gestrichelten Pfeil ix-vi angedeutet so lange wiederholt, bis die im sechsten Verfahrensschritt VI festgestellte Temperatur gleich oder niedriger ist, als der zweite Schwellenwert. Hierdurch kann eine flackernde Lichtabgabe der mindestens einen OLED 20 durch ständiges Ein- und Ausschalten vermeiden werden, indem das Verfahren die Aufhebung der zwangsweisen Trennung und/oder zwangsweisen Unterbindung von der Stromversorgung 03 einhergehend mit einer Entlassung der OLED 20 in einen momentan vorgegebenen Betriebszustand und damit ein Wiedereinschalten der OLED 20 bei einem momentanen vorgegebenen Betriebszustand, der einen Warmzustand der OLED 20 vorsieht, erst ab einer zweiten Schwellentemperatur vorsieht, die unterhalb der ersten Schwellentemperatur liegt, beispielsweise um deutliche 5° unter der ersten Schwellentemperatur.

Durch die beiden den sechsten Verfahrensschritt VI umfassenden Alternativen wird ein Weg aufgezeigt, der ohne beispielsweise durch Abstellung einer Zündung eines Fahrzeugs stattfindende Unterbrechung während des durch veränderliche momentan vorgegebene Betriebszustände gekennzeichneten Betriebs des Leuchtmittels 01 die zumindest eine OLED 20 wieder als Lichtquelle 02 zur Verfügung stellt, sobald sich diese abgekühlt hat.

Um OLEDs vor einer Überhitzung und damit vor einer Zerstörung zu schützen, sieht die Erfindung damit ein hartes Abschalten von OLEDs oberhalb einer ersten Schwellentemperatur vor, die unterhalb deren im Warmzustand ertragbaren Temperaturgrenze liegt. Die Erfindung kann demnach durch ein hartes, jedoch zerstörungsfreies Abschalten einer OLED bei Erreichen einer ersten Schwellentemperatur verwirklicht sein.

Die Überwachung einer Temperatur mindestens einer als wenigstens eine Lichtquelle 02 des Leuchtmittels 01 vorgesehenen OLED 20 kann erfolgen, indem eine Temperatur erfasst wird, von welcher Temperatur aus auf die Temperatur der OLED 20 rückgeschlossen werden kann.

Beispielsweise kann die Überwachung der Temperatur durch Erfassung einer Temperatur der OLED 20 und/oder einer Temperatur einer unmittelbaren Umgebung mindestens einer als wenigstens eine Lichtquelle 02 des Leuchtmittels 01 vorgesehenen OLED 20 und/oder durch Erfassung mindestens einer einer Temperatur der OLED 20 und/oder einer Temperatur einer unmittelbaren Umgebung der OLED 20 proportionalen Größe erfolgen.

Eine denkbare Größe ist beispielsweise ein bei konstanter Spannung durch ein Elektronikbauteil des Leuchtmittels 01 fließender, sich mit verändernder Temperatur verändernder Strom und/oder eine sich bei konstantem durch ein Elektronikbauteil des Leuchtmittels 01 fließendem Strom mit verändernder Temperatur verändernde Spannung. Auch die Messung eines sich mit verändernder Temperatur verändernden Widerstands, sei es ein induzierter oder ein ohmscher Widerstand, eines Elektronikbauteils eignet sich grundsätzlich als Größe zur Erfassung einer Temperatur.

Bei dem Elektronikbauteil kann es sich um einen Temperatursensor, einen Widerstand, ein Halbleiterbauelement oder gar um eine Lichtquelle 02, beispielsweise eine LED oder eine OLED 20, des Leuchtmittels 01 handeln, um nur einige denkbare Ausgestaltungen zu nennen. Beispielsweise eignet sich eine Strom- und/oder Spannungskurve einer LED und/oder einer OLED 20 ebenfalls, um anhand der erfassten Werte für den Strom und/oder die Spannung auf die momentan vorherrschende Temperatur rückzuschließen, welche die LED und/oder die OLED 20 gerade erfährt bzw. welcher die LED und/oder die OLED 20 gerade ausgesetzt ist.

Das Verfahren kann zusätzlich beispielsweise in einem wie durch die gestrichelten Pfeile i-xi und xi-ii angedeutet zwischen dem ersten Verfahrensschritt I und dem zweiten Verfahrensschritt II stattfindenden elften Verfahrensschritt XI eine Überwachung des momentan vorgegebenen Betriebszustands vorsehen. Dabei wird zwischen einem Warmzustand, bei dem die anhand des momentan vorgegebenen Betriebszustands schaltbare Stromversorgung 03 aufgeschaltet ist und eine Lichtabgabe der wenigstens einen Lichtquelle 02 vorgegeben ist, und einem Kaltzustand, bei dem die anhand des momentan vorgegebenen Betriebszustands schaltbare Stromversorgung 03 getrennt und/oder abgeschaltet ist und keine Lichtabstrahlung der wenigstens einen Lichtquelle 02 vorgegeben ist, unterschieden.

Ein eine Überwachung des momentan vorgegebenen Betriebszustands ausführendes Verfahren kann in seinen aufeinander folgenden Verfahrensschritten beispielsweise vorsehen, dass wenn:
- die bei der Überwachung festgestellte Temperatur den ersten Schwellenwert überschreitet und der überwachte, vorgegebene Betriebszustand den Warmzustand der wenigstens einen Lichtquelle 02 des Leuchtmittels 01 vorsieht, die mindestens eine OLED 20 von der Stromversorgung 03 zwangsweise getrennt und in den Kaltzustand versetzt wird,
- die bei der Überwachung festgestellte Temperatur den ersten Schwellenwert überschreitet und der überwachte, vorgegebene Betriebszustand den Kaltzustand der wenigstens einen Lichtquelle 02 des Leuchtmittels 01 vorsieht, die mindestens eine OLED 20 im Kaltzustand belassen und ein Wechsel in den Warmzustand der mindestens einen OLED 20 zwangsweise unterbunden wird, und
- die bei der Überwachung festgestellte Temperatur den ersten Schwellenwert unterschreitet, die zwangsweise Trennung aufgehoben und die mindestens eine OLED 20 in den überwachten, momentan vorgegebenen Betriebszustand, der einen Warm- oder Kaltzustand der mindestens einen OLED 20 vorsieht, entlassen wird.

In Kombination mit einem zweiten, niedrigeren Schwellenwert kann ein solches, eine Überwachung des momentan vorgegebenen Betriebszustands ausführendes Verfahren vorsehen, dass nach einer zuvor stattgefundenen zwangsweisen Trennung der mindestens eine OLED 20 von der Stromversorgung 03 eine Aufhebung der zwangsweisen Trennung der mindestens eine OLED 20 von der Stromversorgung 03 unter Entlassung der mindestens einen OLED 20 in den überwachten, momentan vorgegebenen Betriebszustand, der einen Warm- oder Kaltzustand der mindestens einen OLED 20 vorsieht, erst erfolgt, wenn die bei der Überwachung festgestellte Temperatur den zweiten Schwellenwert, der niedriger ist, als der erste Schwellenwert, erreicht oder unterschreitet.

Vorteile eines eine Überwachung des momentan vorgegebenen Betriebszustands umfassenden Verfahrens sind, dass damit bei einer Ausgestaltung beispielsweise des Leuchtmittels 01 ausschließlich mit OLEDs 20 als Lichtquellen 02 oder bei einer Ausgestaltung des Leuchtmittels mit je Lichtquelle 02 einzeln schaltbaren Stromversorgungen 03 direkt, beispielsweise durch digital erzeugbare Schaltsignale, Einfluss auf die Steuerung der schaltbaren Stromversorgung genommen werden kann, um eine OLED 20 zwangsweise in Kaltzustand zu versetzen und wieder in einen vorgegebenen Betriebszustand zu entlassen.

Bei einem in Fig. 2 oder in Fig. 3 ganz oder in Teilen dargestellten, beispielsweise zur Verwendung in einer als Heckleuchte ausgeführten Fahrzeugleuchte vorgesehenen, zur Ausführung eines zuvor beschriebenen Verfahrens geeigneten Leuchtmittel 01 mit mindestens einer OLED 20 als wenigstens eine Lichtquelle 02 ist dessen zumindest eine Lichtquelle 02 mit einer abhängig von einem momentan vorgegebenen Betriebszustand schaltbaren Stromversorgung 03 verbunden oder verbindbar.

Der momentan vorgegebene Betriebszustand sieht einen Warmzustand, bei dem die zumindest eine Lichtquelle 02 unter Lichtabstrahlung stromdurchflossen ist, oder einen Kaltzustand, bei dem die zumindest eine Lichtquelle 02 frei von einem Stromdurchfluss ist und keine Lichtabstrahlung aufweist, vor. Das Leuchtmittel umfasst:
- Mittel 04 zur Überwachung der Temperatur mindestens einer als Lichtquelle 02 vorgesehenen OLED 20.
- Mittel 05 zum Vergleich der bei der Überwachung festgestellten Temperatur mit einem ersten Schwellenwert, der unterhalb einer Temperaturgrenze liegt, bei deren Überschreitung eine sich im Warmzustand befindliche OLED 20 eine irreversible Zerstörung erfährt. Die Mittel 05 zum Vergleich der bei der Überwachung festgestellten Temperatur mit dem ersten Schwellenwert erzeugen ein vom Ergebnis des Vergleichs abhängiges Steuersignal.
- Mittel 06 zur Beeinflussung der Stromversorgung 03 mindestens einer als wenigstens eine Lichtquelle 02 des Leuchtmittels 01 vorgesehenen OLED 20 anhand des Steuersignals.

Das Steuersignal veranlasst die Mittel 06 zur Beeinflussung der Stromversorgung 03:
- die schaltbare Stromversorgung 03 der mindestens einen als wenigstens eine Lichtquelle 02 des Leuchtmittels 01 vorgesehenen OLED 20 gemäß einem momentan vorgegebenen Betriebszustand zu belassen, wenn die bei der Überwachung festgestellte Temperatur den ersten Schwellenwert unterschreitet. Hierdurch wird die mindestens eine OLED 20 im momentan vorgegebenen Betriebszustand betrieben.
- die schaltbare Stromversorgung 03 der mindestens einen als wenigstens eine Lichtquelle 02 des Leuchtmittels 01 vorgesehenen OLED 20 zwangsweise zu trennen, wenn als Ergebnis des Vergleichs die bei der Überwachung festgestellte Temperatur den ersten Schwellenwert erreicht oder überschreitet, um einen Kaltzustand der OLED 20 zu erzwingen. Dies erfolgt, indem, wenn ein momentan vorgegebener Betriebszustand den Warmzustand der OLED 20 vorsieht, die mindestens eine OLED 20 in den Kaltzustand versetzt wird, und indem, wenn ein momentan vorgegebener Betriebszustand den Kaltzustand der OLED 20 vorsieht, auch bei einer Änderung des momentan vorgegebenen Betriebszustands die OLED 20 im Kaltzustand belassen und eine Aufschaltung der Stromversorgung 03 der OLED 20 zwangsweise unterbunden wird, wodurch diese nicht aus dem Kalt- in den Warmzustand versetzt werden kann.

Bei dem vorgegebenen Betriebszustand handelt es sich um einen beispielsweise durch einen momentanen Fahrzustand eines Fahrzeugs und/oder ein Steuergerät und/oder eine Elektronikschaltung vorgegebenen, zwischen Warm- und Kaltzustand veränderlichen, momentan für die mindestens eine OLED 20 sowie gegebenenfalls wenigstens eine andere Lichtquellen 02 des Leuchtmittels 01 vorgesehenen Betriebszustand. Der vorgegebene Betriebszustand sieht momentan einen Warmzustand oder einen Kaltzustand der OLED 20 vor.

Die Mittel 04 zur Überwachung der Temperatur mindestens einer als wenigstens eine Lichtquelle 02 des Leuchtmittels 01 vorgesehenen OLED 20 können Mittel zur Erfassung einer Temperatur umfassen, welche einen Rückschluss auf die Temperatur der OLED 20 zulässt, beispielsweise durch unmittelbare Erfassung der Temperatur der OLED 20 oder einer der OLED 20 proportionalen Temperatur.

Die Mittel 04 zur Überwachung der Temperatur können alternativ oder zusätzlich der Erfassung einer Temperatur mindestens einer als wenigstens eine Lichtquelle 02 zumindest eines Leuchtmittels 01 vorgesehenen OLED 20 und/oder einer Temperatur einer unmittelbaren Umgebung mindestens einer als wenigstens eine Lichtquelle 02 zumindest eines Leuchtmittels 01 vorgesehenen OLED 20 und/oder der Erfassung mindestens einer einer Temperatur mindestens einer als wenigstens eine Lichtquelle 02 zumindest eines Leuchtmittels 01 vorgesehenen OLED 20 und/oder einer Temperatur einer unmittelbaren Umgebung mindestens einer als wenigstens eine Lichtquelle 02 zumindest eines Leuchtmittels 01 vorgesehenen OLED 20 proportionalen Größe dienen.

Grundsätzlich kann demnach eine Überwachung einer Temperatur mindestens einer als wenigstens eine Lichtquelle 02 zumindest eines Leuchtmittels 01 vorgesehenen OLED 20 erfolgen, indem eine Temperatur und/oder Größe erfasst wird, von welcher Temperatur und/oder Größe aus auf die Temperatur der OLED 20 rückgeschlossen werden kann.

Eine denkbare Größe ist beispielsweise ein bei konstanter Spannung durch ein Elektronikbauteil des Leuchtmittels 01 fließender, sich mit verändernder Temperatur verändernder Strom und/oder eine sich bei konstantem durch ein Elektronikbauteil des Leuchtmittels 01 fließendem Strom mit verändernder Temperatur verändernde Spannung. Auch die Messung eines sich mit verändernder Temperatur verändernden Widerstands, sei es ein induzierter oder ein ohmscher Widerstand, eines Elektronikbauteils des Leuchtmittels 01 eignet sich grundsätzlich als Größe zur Erfassung einer Temperatur.

Bei dem Elektronikbauteil des Leuchtmittels 01 kann es sich um einen Temperatursensor, einen Widerstand, ein Halbleiterbauelement oder gar um eine Lichtquelle 02 handeln, beispielsweise eine LED oder eine OLED 20, um nur einige denkbare Ausgestaltungen zu nennen. Beispielsweise eignet sich eine Strom- und/oder Spannungskurve einer LED und/oder einer OLED 20 ebenfalls, um anhand der erfassten Werte für den Strom und/oder die Spannung auf die momentan vorherrschende Temperatur rückzuschließen, welche die LED und/oder die OLED 20 gerade erfährt bzw. welcher die LED und/oder die OLED 20 gerade ausgesetzt ist.

So sind beispielsweise zur Erfassung einer Temperatur Temperatursensoren bekannt, welche ihren Widerstand verändern, wie etwa so genannte Heißleiter oder Kaltleiter, oder welche direkt ein verarbeitbares elektrisches Signal liefern, wie etwa Halbleiter-Temperatursensoren , die einen zu ihrer Temperatur proportionalen Strom oder eine zu ihrer Temperatur proportionale Spannung oder ein von ihrer Temperatur abhängiges digitales Signal liefern. So sinkt beispielsweise die Basis-Emitter-Spannung eines als Diode geschalteten Transistors mit steigender Temperatur.

Die Mittel zur Überwachung der Temperatur mindestens einer als Lichtquelle vorgesehenen OLED 20 können Mittel zur Erfassung einer oder mehrerer und/oder eine Kombination zuvor genannter Größen umfassen und/oder sie können eines oder mehrere und/oder eine Kombination der erwähnten Elektronikbauteile umfassen und/oder sie können einen oder mehrere Temperatursensoren, wie etwa einen oder mehrere und/oder eine Kombination der zuvor genannten Temperatursensoren umfassen.

Die Mittel 06 zur Beeinflussung der Stromversorgung mindestens einer als wenigstens eine Lichtquelle 02 des Leuchtmittels 01 vorgesehenen OLED 20 können einen in einer als Versorgungsleitung dienenden, beispielsweise als eine Leiterbahn eines Leiterbahnträgers ausgeführten Verbindungsleitung von der schaltbaren Stromversorgung 03 zu der mindestens einen als wenigstens eine Lichtquelle 02 des Leuchtmittels 01 dienenden OLED 20 angeordneten, vermittels des Steuersignals betätigbaren Schalter 60 umfassen.

Die anhand eines vorgegebenen Betriebszustands schaltbare Stromversorgung 03 kann außerhalb des Leuchtmittels 01, beispielsweise fahrzeug- und/oder fahrzeugleuchtenseitig vorgesehen sein, wie dies in Fig. 2 dargestellt ist.

Alternativ kann die anhand eines vorgegebenen Betriebszustands schaltbare Stromversorgung 03 vom Leuchtmittel 01 umfasst und damit Teil des Leuchtmittels 01 sein, wie dies in Fig. 3 dargestellt ist.

Das Leuchtmittel 01 kann Mittel zur Überwachung eines vorgegebenen Betriebszustands mindestens einer als wenigstens eine Lichtquelle des Leuchtmittels vorgesehenen OLED aufweisen. Diese Mittel zur Überwachung eines vorgegebenen Betriebszustands unterscheiden zwischen:
- einem Warmzustand, bei dem eine Stromversorgung 03 der wenigstens einen Lichtquelle 02 des Leuchtmittels 01 aufgeschaltet ist und die wenigstens eine Lichtquelle 02 unter Lichtabgabe stromdurchflossen ist, und
- einem Kaltzustand, bei dem eine Stromversorgung 03 der wenigstens einen Lichtquelle 02 des Leuchtmittels 01 abgeschaltet ist und die wenigstens eine Lichtquelle 02 weder stromdurchflossen ist, noch Licht abstrahlt.

Die Mittel zur Überwachung eines vorgegebenen Betriebszustands erlauben eine Softwaresteuerung des Leuchtmittels 01 anhand eines zuvor beschriebenen Verfahrens. Die Mittel 06 zur Beeinflussung der Stromversorgung 03 wenigstens einer als Lichtquelle 02 des Leuchtmittels 01 vorgesehenen OLED 20 können hierbei Programmmittel umfassen, die beispielsweise von einem Mikroprozessor ausgeführt anhand des beispielsweise digitalen Steuersignals zwischen Warm- und Kaltzustand der mindestens einen OLED 20 abhängig von der erfassten Temperatur, dem Temperaturvergleich und dem momentan vorgegebenen Betriebszustand wechseln.

Die Mittel 05 zum Vergleich der bei der Überwachung festgestellten Temperatur mit einem ersten Schwellenwert, der unterhalb einer Temperaturgrenze liegt, bei deren Überschreitung eine sich im Warmzustand befindliche OLED 20 eine irreversible Zerstörung erfährt, können zusätzlich zum Vergleich der bei der Überwachung festgestellten Temperatur mit einem zweiten Schwellenwert dienen, der niedriger als der erste Schwellenwert ist. Die Mittel 05 zum Vergleich erzeugen in diesem Fall ein Steuersignal, welches die Mittel 06 zur Beeinflussung der schaltbaren Stromversorgung 03 veranlasst:
- die schaltbare Stromversorgung 03 der mindestens einen als wenigstens eine Lichtquelle 02 des Leuchtmittels 01 vorgesehenen OLED 20 zu belassen, wenn die bei der Überwachung festgestellte Temperatur den ersten Schwellenwert unterschreitet, um die mindestens einen OLED 20 im momentan vorgegebenen Betriebszustand zu betreiben,
- die schaltbare Stromversorgung 03 der mindestens einen als wenigstens eine Lichtquelle 02 des Leuchtmittels 01 vorgesehenen OLED 20 zwangsweise zu trennen, wenn als Ergebnis des Vergleichs die bei der Überwachung festgestellte Temperatur den ersten Schwellenwert erreicht oder überschreitet, um einen Kaltzustand der OLED 20 zu erzwingen, indem, wenn ein momentan vorgegebener Betriebszustand den Warmzustand der OLED 20 vorsieht, die mindestens eine OLED 20 in den Kaltzustand versetzt wird, und indem, wenn ein momentan vorgegebener Betriebszustand den Kaltzustand der OLED 20 vorsieht, auch bei einer Änderung des momentan vorgegebenen Betriebszustands die OLED 20 im Kaltzustand zu belassen und eine Aufschaltung der Stromversorgung der OLED 20 zwangsweise zu unterbinden, wodurch diese nicht aus dem Kalt- in den Warmzustand versetzt werden kann, und
- die zwangsweise Trennung von der schaltbaren Stromversorgung 03 erst wieder aufhebt, wenn als Ergebnis des Vergleichs die bei der Überwachung festgestellte Temperatur den zweiten Schwellenwert erreicht oder unterschreitet, um die OLED 20 in den momentan vorgegebenen Betriebszustand, bei dem sich die OLED 20 entweder im Kaltzustand oder im Warmzustand befindet, zu entlassen.

Hierdurch wird die OLED 20 erst dann wieder in den momentan vorgegebenen Betriebszustand, bei dem die OLED 20 entweder von der schaltbaren Stromversorgung 03 getrennt oder die Stromversorgung 03 aufgeschaltet ist, entlassen, wenn die bei der Überwachung festgestellte Temperatur den ersten Schwellenwert unterschreitet und kleiner oder gleich dem zweiten Schwellenwert ist.

Damit erfolgt ein Einschalten oder Wiedereinschalten der OLED 20 bei einem momentanen vorgegebenen Betriebszustand, der einen Warmzustand der OLED 20 vorsieht, erst ab der zweiten Schwellentemperatur, die unterhalb der ersten Schwellentemperatur liegt, beispielsweise um deutliche 5° unter der ersten Schwellentemperatur.

Eine flackernde Lichtabgabe durch ständiges Ein- und Ausschalten der OLED 20 wird hierdurch vermieden.

In einer Fahrzeugleuchte können ein oder mehrere entsprechende Leuchtmittel 01 vorgesehen sein. Eine mit mindestens einem entsprechenden Leuchtmittel ausgestattete Fahrzeugleuchte kann beispielsweise einen im Wesentlichen von einem Leuchtengehäuse und einer Lichtscheibe zumindest teilweise umschlossenen Leuchteninnenraum aufweisen, in dem mindestens ein Leuchtmittel 01 beherbergt ist. Die Fahrzeugleuchte kann beispielsweise als eine Heckleuchte für ein Kraftfahrzeug ausgebildet sein.

Die Erfindung stellt eine Möglichkeit dar, OLEDs 20 in Fahrzeugleuchten in einem großen Temperaturbereich zu betreiben.

Mit Hilfe einer die Mittel 04, 05, 06 umfassenden elektrischen Schaltungsanordnung, die auch Temperaturfühler beinhaltet, kann die OLED 20 abgeschaltet werden, bevor eine kritische Temperaturgrenze - die individuell einstellbar ist - erreicht wird. Diese liegt bei aktuellen OLEDs 20 etwa bei 115°C und darüber. Allerdings sind auch Temperaturen ab 95°C schon kritisch für die OLED 20. Ihre Lebensdauer nimmt überproportional stark ab mit der Temperatur.

Daher ist es vorteilhaft schon ab dieser Temperatur die OLED 20 zu schützen. Dies ist insbesondere daher wichtig, da sich die OLED 20 durch ihren Betrieb auch noch zusätzlich erwärmt. Im ausgeschaltenen Zustand ist die OLED 20 somit kühler. Weiterhin reagieren die OLEDs 20 in Bezug auf Alterung und Zerstörung weitaus unsensibler auf hohe Temperaturen im Kaltzustand, als wenn die Schichten, aus denen sie aufgebaut sind, bestromt werden und somit unter elektrischem Stress stehen.

Die Erfindung sieht daher eine Komplettabschaltung zumindest von als Lichtquellen 02 verwendeten OLEDs 20 eines Leuchtmittels 01 vor. Hierdurch schützt sich das Leuchtmittel selbst vor einer Zerstörung seiner als OLEDs 20 ausgeführten Lichtquellen 02. Bei günstigeren Temperaturbedingungen können die OLEDs 20 auch wieder angeschaltet werden.

Einschränkungen sind hierbei nicht zu erwarten, da entsprechend hohe Außentemperaturen nur dann auftreten, wenn auch die Sonne scheint und damit zumindest keine dauerhaft betriebene, durch eine OLED 20 zu erfüllende Lichtfunktion vonnöten ist.

Ebenfalls wichtig ist hervorzuheben, dass zwischen den Extrema des dritten Verfahrensschritts III, der auf den zweiten Verfahrensschritt II folgt, wenn die bei der Überwachung festgestellte Temperatur den ersten Schwellenwert unterschreitet, und bei dem ein Betrieb der mindestens einen OLED 20 im momentan vorgegebenen Betriebszustand vorgesehen ist, und dem vierten Verfahrensschritt IV, der auf den zweiten Verfahrensschritt II folgt, wenn die bei der Überwachung festgestellte Temperatur den ersten Schwellenwert erreicht oder überschreitet, und bei dem eine zwangsweise Trennung der mindestens einen als wenigstens eine Lichtquelle 02 des Leuchtmittels 01 vorgesehenen OLED 20 von der Stromversorgung 03 unabhängig von dem momentan vorgegebenen Betriebszustand vorgesehen ist, weitere Schwellenwerte und angepasste Strom- und/oder Spannungswerte und/oder Strom- und/oder Spannungsgrenzen vorgesehen sein können.

Hierdurch können mehrere Temperaturschwellwerte vorgesehen sein, ab denen beispielsweise unterschiedliche Regelungskurven etwa für den durch eine OLED 20 maximal hindurchgehenden Strom vorgesehen sein können.

Eine denkbare Ausgestaltung kann demnach vorsehen, die OLED 20 mit zunehmender Temperatur zunehmend zu dimmen. Beispielsweise kann vorgesehen sein, die OLED 20 bis zu einem ersten Temperaturschwellwert von beispielsweise 40°C mit 100% Bestromung betrieben.

Oberhalb des ersten Temperaturschwellwert wird die Bestromung immer mehr verringert, bis ein zweiter Temperaturschwellwert erreicht ist.

Bei dem zweiten Temperaturschwellwert wird die Bestromung der OLED 20 komplett abgeschaltet und die OLED 20 wie im vierten Verfahrensschritt IV vorgesehen zwangsweise von der Stromversorgung getrennt.

Alternativ kann die Bestromung ab Erreichen des zweiten Temperaturschwellwerts konstant gehalten werden, bis ein dritter Temperaturschwellwert erreicht ist, bei dessen Erreichen eine zwangsweise Trennung von der Stromversorgung gemäß dem vierten Verfahrensschritt stattfindet.

Die Regelkurve zwischen den Schwellwerten kann beliebig ausgeführt sein, beispielsweise exponentiell, linear, etc..

Alternativ oder zusätzlich kann das Verfahren vorsehen, dass ab einem ersten Schwellwert eine elektronische Regelung einsetzt. Diese elektronische Regelung regelt allerdings so, dass ein beispielsweise der Sollbestromung entsprechender, maximaler Strom an der OLED 20 anliegt. Diese Sollbestromung wird so lange wie möglich aufrecht erhalten. Bei höherer Umgebungstemperatur erhitzt sich auch die OLED 20 mehr und die Bestromung wird verringert, aber immer nur so, dass an der OLED 20 konstant eine spezifizierte Maximaltemperatur von beispielsweise 95°C anliegt. Diese wird über einen beispielsweise als Heißleiter (NTC; Negative Temperature Coefficient Thermistor) ausgeführten oder einen Heißleiter umfassenden Temperaturfühler an oder in der Nähe der OLED 20 gemessen. So kann so lange wie möglich die OLED 20 hell gehalten werden, ohne den ersten Schwellenwert, der unterhalb der Temperaturgrenze liegt, bei deren Überschreitung eine sich im Warmzustand befindliche OLED 20 eine irreversible Zerstörung erfährt, zu überschreiten. Zu bedenken ist hierbei natürlich, dass die Elemente thermisch träge sind und beispielsweise die OLED 20 wärmer wird, es aber einige Zeit dauert, bis der Sensor dies registriert, weil die Wärmeleitung aufgrund der Wärmekapazität der an der Wärmeübertragung beteiligten Komponenten Zeit benötigt und somit kleine Schwankungen möglich sind.

Die Erfindung ist insbesondere im Bereich der Herstellung von Fahrzeugleuchten und Leuchtmitteln für Fahrzeugleuchten gewerblich anwendbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Leuchtmittel
- 02: Lichtquelle
- 03: Stromversorgung
- 04: Mittel
- 05: Mittel
- 06: Mittel
- 20: OLED
- 60: Schalter

- I: Verfahrensschritt
- II: Verfahrensschritt
- III: Verfahrensschritt
- IV: Verfahrensschritt
- V: Verfahrensschritt
- VI: Verfahrensschritt
- VII: Verfahrensschritt
- VIII: Verfahrensschritt
- IX: Verfahrensschritt
- X: Verfahrensschritt
- XI: Verfahrensschritt
- iv-v: Pfeil
- iv-vi: Pfeil
- vii-vi: Pfeil
- ix-vi: Pfeil
- i-xi: Pfeil
- xi-ii: Pfeil

## Patentansprüche

1. Verfahren zum Betrieb mindestens einer OLED (20) als wenigstens eine Lichtquelle (02) zumindest eines Leuchtmittels (01) einer Fahrzeugleuchte, dessen zumindest eine Lichtquelle (02) mit einer abhängig von einem momentan vorgegebenen Betriebszustand schaltbaren Stromversorgung (03) verbunden ist, welcher momentan vorgegebene Betriebszustand einen Warmzustand oder einen Kaltzustand der zumindest einen Lichtquelle (02) vorsieht, umfassend die Verfahrensschritte:
- Überwachung einer Temperatur mindestens einer als wenigstens eine Lichtquelle (02) des Leuchtmittels (01) vorgesehenen OLED (20),
- Vergleich der bei der Überwachung festgestellten Temperatur mit einem ersten Schwellenwert, wobei der erste Schwellenwert unterhalb einer Temperaturgrenze liegt, bei deren Überschreitung eine sich in einem Warmzustand befindliche OLED (20) eine irreversible Zerstörung erfährt,
- Betrieb der mindestens einen OLED (20) im momentan vorgegebenen Betriebszustand, wenn die bei der Überwachung festgestellte Temperatur den ersten Schwellenwert unterschreitet, und
- zwangsweise Trennung der mindestens einen OLED (20) von der Stromversorgung (03) unabhängig von dem momentan vorgegebenen Betriebszustand, wenn die bei der Überwachung festgestellte Temperatur den ersten Schwellenwert erreicht hat oder überschreitet.

2. Verfahren nach Anspruch 1, wobei nach einer zwangsweisen Trennung der mindestens einen OLED (20) von der Stromversorgung (03) eine Wiederaufhebung der zwangsweisen Trennung der mindestens einen OLED (20) von der Stromversorgung (03) unter Entlassung der OLED (20) in den momentan vorgegebenen Betriebszustand erfolgt, wenn die bei der Überwachung festgestellte Temperatur den ersten Schwellenwert unterschreitet oder von einem höheren Temperaturwert kommend wieder erreicht hat.

3. Verfahren nach Anspruch 1, wobei nach einer zwangsweisen Trennung der mindestens einen OLED (20) von der Stromversorgung (03) eine Wiederaufhebung der zwangsweisen Trennung der mindestens einen OLED (20) von der Stromversorgung (03) unter Entlassung der OLED (20) in den momentan vorgegebenen Betriebszustand erst wieder erfolgt, wenn die bei der Überwachung festgestellte Temperatur einen zweiten Schwellenwert, welcher niedriger ist als der erste Schwellenwert, erreicht oder unterschreitet.

4. Verfahren nach einem der Ansprüche 1, 2 oder 3, wobei die Überwachung einer Temperatur mindestens einer als wenigstens eine Lichtquelle (02) zumindest eines Leuchtmittels (01) vorgesehenen OLED (20) erfolgt, indem eine Temperatur erfasst wird, von welcher Temperatur aus auf die Temperatur der OLED (20) rückgeschlossen werden kann.

5. Verfahren nach einem der voranstehenden Ansprüche, wobei die Überwachung der Temperatur durch Erfassung einer Temperatur mindestens einer OLED (20) und/oder einer Temperatur einer unmittelbaren Umgebung mindestens einer OLED (20) und/oder durch Erfassung mindestens einer einer Temperatur mindestens einer OLED (20) und/oder einer Temperatur einer unmittelbaren Umgebung mindestens einer OLED (20) proportionalen Größe erfolgt.

6. Verfahren nach einem der voranstehenden Ansprüche, wobei eine Überwachung des momentan vorgegebenen Betriebszustands vorgesehen ist, wobei zwischen einem Warmzustand, bei dem die anhand des momentan vorgegebenen Betriebszustands schaltbare Stromversorgung (03) aufgeschaltet ist und eine Lichtabgabe der wenigstens einen Lichtquelle (02) vorgegeben ist, und einem Kaltzustand, bei dem die anhand des momentan vorgegebenen Betriebszustands schaltbare Stromversorgung (03) abgeschaltet ist und keine Lichtabstrahlung der wenigstens einen Lichtquelle (02) vorgegeben ist, unterschieden wird.

7. Verfahren nach Anspruch 6, wobei wenn:
- die bei der Überwachung festgestellte Temperatur den ersten Schwellenwert überschreitet und der überwachte, vorgegebene Betriebszustand den Warmzustand der wenigstens einen Lichtquelle (02) des Leuchtmittels (01) vorsieht, die mindestens eine OLED (20) von der Stromversorgung (03) zwangsweise getrennt und in den Kaltzustand versetzt wird,
- die bei der Überwachung festgestellte Temperatur den ersten Schwellenwert überschreitet und der überwachte, vorgegebene Betriebszustand den Kaltzustand der wenigstens einen Lichtquelle (02) des Leuchtmittels (01) vorsieht, die mindestens eine OLED (20) im Kaltzustand belassen und ein Warmzustand der mindestens einen OLED (20) zwangsweise unterbunden wird, und
- die bei der Überwachung festgestellte Temperatur den ersten Schwellenwert unterschreitet, die zwangsweise Trennung aufgehoben und die mindestens eine OLED (20) in den überwachten, momentan vorgegebenen Betriebszustand, der einen Warm- oder Kaltzustand der mindestens einen OLED (20) vorsieht, entlassen wird.

8. Leuchtmittel (01) für eine Fahrzeugleuchte mit mindestens einer OLED (20) als wenigstens eine Lichtquelle (02), dessen zumindest eine Lichtquelle (02) mit einer abhängig von einem momentan vorgegebenen Betriebszustand schaltbaren Stromversorgung (03) verbunden ist, welcher momentan vorgegebene Betriebszustand einen Warmzustand, oder einen Kaltzustand der zumindest einen Lichtquelle (02) vorsieht, umfassend:
- Mittel (04) zur Überwachung der Temperatur mindestens einer als Lichtquelle (02) vorgesehenen OLED (20),
- Mittel (05) zum Vergleich der bei der Überwachung festgestellten Temperatur mit einem ersten Schwellenwert, der unterhalb einer Temperaturgrenze liegt, bei deren Überschreitung eine sich im Warmzustand befindliche OLED (20) eine irreversible Zerstörung erfährt, wobei die Mittel zum Vergleich der bei der Überwachung festgestellten Temperatur mit dem ersten Schwellenwert ein vom Ergebnis des Vergleichs abhängiges Steuersignal erzeugen, und
- Mittel (06, 60) zur Beeinflussung der Stromversorgung (03) mindestens einer OLED (20) anhand des Steuersignals,
wobei das Steuersignal die Mittel (06, 60) zur Beeinflussung der Stromversorgung (03) veranlasst:
- die Stromversorgung (03) der mindestens einen OLED (20) zu belassen, wenn die bei der Überwachung festgestellte Temperatur den ersten Schwellenwert unterschreitet, um die mindestens einen OLED (20) im momentan vorgegebenen Betriebszustand zu betreiben, und
- die Stromversorgung (03) der mindestens einen OLED (20) zwangsweise zu trennen, wenn die bei der Überwachung festgestellte Temperatur den ersten Schwellenwert erreicht oder überschreitet, um einen Kaltzustand der OLED (20) zu erzwingen.

9. Leuchtmittel nach Anspruch 8, wobei die Mittel (04) zur Überwachung der Temperatur mindestens einer OLED (20) Mittel zur Erfassung einer Temperatur umfassen, welche einen Rückschluss auf die Temperatur der OLED (20) zulässt.

10. Leuchtmittel nach Anspruch 8 oder 9, wobei die Mittel (04) zur Überwachung der Temperatur der Erfassung einer Temperatur mindestens einer OLED (20) und/oder einer Temperatur einer unmittelbaren Umgebung mindestens einer OLED (20) und/oder der Erfassung mindestens einer einer Temperatur mindestens einer OLED (20) und/oder einer Temperatur einer unmittelbaren Umgebung der OLED (20) proportionalen Größe dienen.

11. Leuchtmittel nach Anspruch 8, 9 oder 10, wobei die Mittel (06) zur Beeinflussung der Stromversorgung (03) wenigstens einen in einer Verbindungsleitung von der schaltbaren Stromversorgung (03) zu der mindestens einen OLED (20) angeordneten, vermittels des Steuersignals betätigbaren Schalter (60) umfassen.

12. Leuchtmittel nach einem der Ansprüche 8 bis 11, wobei das Leuchtmittel (01) Mittel zur Überwachung eines vorgegebenen Betriebszustands mindestens einer als wenigstens eine Lichtquelle (02) vorgesehenen OLED (20) aufweist, welche Mittel zur Überwachung eines vorgegebenen Betriebszustands unterscheiden zwischen:
- einem Warmzustand, bei dem eine Stromversorgung (03) der wenigstens einen Lichtquelle (02) des Leuchtmittels (01) aufgeschaltet ist und eine Lichtabgabe vorgegeben ist, und
- einem Kaltzustand, bei dem eine Stromversorgung (03) der wenigstens einen Lichtquelle (02) des Leuchtmittels (01) abgeschaltet ist und keine Lichtabstrahlung vorgesehen ist.

13. Leuchtmittel nach einem der Ansprüche 8 bis 12, wobei die Mittel (05) zum Vergleich der bei der Überwachung festgestellten Temperatur mit einem ersten Schwellenwert, der unterhalb einer Temperaturgrenze liegt, bei deren Überschreitung eine sich im Warmzustand befindliche OLED (20) eine irreversible Zerstörung erfährt, zusätzlich zum Vergleich der bei der Überwachung festgestellten Temperatur mit einem zweiten Schwellenwert, der niedriger als der erste Schwellenwert ist, vorsehen, wobei die Mittel (5) zum Vergleich ein Steuersignal erzeugen, welches die Mittel zur Beeinflussung der Stromversorgung veranlasst:
- die Stromversorgung (03) der mindestens einen OLED (20) zu belassen, wenn die bei der Überwachung festgestellte Temperatur den ersten Schwellenwert unterschreitet, um die mindestens einen OLED (20) im momentan vorgegebenen Betriebszustand zu betreiben,
- die Stromversorgung (03) der mindestens einen OLED (20) zwangsweise zu trennen, wenn die bei der Überwachung festgestellte Temperatur den ersten Schwellenwert erreicht oder überschreitet, um einen Kaltzustand der OLED (20) zu erzwingen, und
- die zwangsweise Trennung von der schaltbaren Stromversorgung (03) wieder aufzuheben, wenn die bei der Überwachung festgestellte Temperatur den zweiten Schwellenwert erreicht oder unterschreitet, um die OLED (20) in den momentan vorgegebenen Betriebszustand, bei dem sich die OLED (20) entweder im Kaltzustand oder im Warmzustand befindet, zu entlassen.

14. Fahrzeugleuchte mit wenigstens einem Leuchtmittel (01) nach einem der voranstehenden Ansprüche.

15. Fahrzeugleuchte nach Anspruch 15, wobei:
- die Fahrzeugleuchte einen im Wesentlichen von einem Leuchtengehäuse und einer Lichtscheibe zumindest teilweise umschlossenen Leuchteninnenraum aufweist, in dem mindestens ein Leuchtmittel (01) beherbergt ist, und/oder
- die Fahrzeugleuchte als eine Heckleuchte für ein Kraftfahrzeug ausgebildet ist.

## Geänderte Patentansprüche

### Geänderte Patentansprüche gemäss Regel 137(2) EPÜ.

1. Verfahren zum Betrieb mindestens einer OLED (20) als wenigstens eine Lichtquelle (02) zumindest eines Leuchtmittels (01) einer Fahrzeugleuchte, dessen zumindest eine Lichtquelle (02) mit einer abhängig von einem momentan vorgegebenen Betriebszustand schaltbaren Stromversorgung (03) verbunden ist, welcher momentan vorgegebene Betriebszustand einen Warmzustand oder einen Kaltzustand der zumindest einen Lichtquelle (02) vorsieht, umfassend die Verfahrensschritte:
- Überwachung einer Temperatur mindestens einer als wenigstens eine Lichtquelle (02) des Leuchtmittels (01) vorgesehenen OLED (20),
- Vergleich der bei der Überwachung festgestellten Temperatur mit einem ersten Schwellenwert, wobei der erste Schwellenwert unterhalb einer Temperaturgrenze von 115°C liegt, bei deren Überschreitung eine sich in einem Warmzustand befindliche OLED (20) eine irreversible Zerstörung erfährt,
- Betrieb der mindestens einen OLED (20) im momentan vorgegebenen Betriebszustand, wenn die bei der Überwachung festgestellte Temperatur den ersten Schwellenwert unterschreitet, und
- zwangsweise Trennung der mindestens einen OLED (20) von der Stromversorgung (03) unabhängig von dem momentan vorgegebenen Betriebszustand, wenn die bei der Überwachung festgestellte Temperatur den ersten Schwellenwert erreicht hat oder überschreitet,
wobei weitere Schwellenwerte und angepasste Strom- und/oder Spannungswerte und/oder Strom- und/oder Spannungsgrenzen einhergehend mit mehreren Temperaturschwellenwerten vorgesehen sind, ab denen unterschiedliche Regelungskurven für den durch eine OLED (20) maximal hindurchgehenden Strom vorgesehen sind, wobei die OLED (20) bis zu einem ersten Temperaturschwellenwert mit 100% Bestromung betrieben wird und oberhalb des ersten Temperaturschwellenwerts die Bestromung immer mehr verringert wird, bis ein zweiter Temperaturschwellenwert erreicht ist.

2. Verfahren nach Anspruch 1, wobei nach einer zwangsweisen Trennung der mindestens einen OLED (20) von der Stromversorgung (03) eine Wiederaufhebung der zwangsweisen Trennung der mindestens einen OLED (20) von der Stromversorgung (03) unter Entlassung der OLED (20) in den momentan vorgegebenen Betriebszustand erfolgt, wenn die bei der Überwachung festgestellte Temperatur den ersten Schwellenwert unterschreitet oder von einem höheren Temperaturwert kommend wieder erreicht hat.

3. Verfahren nach Anspruch 1, wobei nach einer zwangsweisen Trennung der mindestens einen OLED (20) von der Stromversorgung (03) eine Wiederaufhebung der zwangsweisen Trennung der mindestens einen OLED (20) von der Stromversorgung (03) unter Entlassung der OLED (20) in den momentan vorgegebenen Betriebszustand erst wieder erfolgt, wenn die bei der Überwachung festgestellte Temperatur einen zweiten Schwellenwert, welcher niedriger ist als der erste Schwellenwert, erreicht oder unterschreitet.

4. Verfahren nach einem der Ansprüche 1, 2 oder 3, wobei die Überwachung einer Temperatur mindestens einer als wenigstens eine Lichtquelle (02) zumindest eines Leuchtmittels (01) vorgesehenen OLED (20) erfolgt, indem eine Temperatur erfasst wird, von welcher Temperatur aus auf die Temperatur der OLED (20) rückgeschlossen werden kann.

5. Verfahren nach einem der voranstehenden Ansprüche, wobei die Überwachung der Temperatur durch Erfassung einer Temperatur mindestens einer OLED (20) und/oder einer Temperatur einer unmittelbaren Umgebung mindestens einer OLED (20) und/oder durch Erfassung mindestens einer einer Temperatur mindestens einer OLED (20) und/oder einer Temperatur einer unmittelbaren Umgebung mindestens einer OLED (20) proportionalen Größe erfolgt.

6. Verfahren nach einem der voranstehenden Ansprüche, wobei eine Überwachung des momentan vorgegebenen Betriebszustands vorgesehen ist, wobei zwischen einem Warmzustand, bei dem die anhand des momentan vorgegebenen Betriebszustands schaltbare Stromversorgung (03) aufgeschaltet ist und eine Lichtabgabe der wenigstens einen Lichtquelle (02) vorgegeben ist, und einem Kaltzustand, bei dem die anhand des momentan vorgegebenen Betriebszustands schaltbare Stromversorgung (03) abgeschaltet ist und keine Lichtabstrahlung der wenigstens einen Lichtquelle (02) vorgegeben ist, unterschieden wird.

7. Verfahren nach Anspruch 6, wobei wenn:
- die bei der Überwachung festgestellte Temperatur den ersten Schwellenwert überschreitet und der überwachte, vorgegebene Betriebszustand den Warmzustand der wenigstens einen Lichtquelle (02) des Leuchtmittels (01) vorsieht, die mindestens eine OLED (20) von der Stromversorgung (03) zwangsweise getrennt und in den Kaltzustand versetzt wird,
- die bei der Überwachung festgestellte Temperatur den ersten Schwellenwert überschreitet und der überwachte, vorgegebene Betriebszustand den Kaltzustand der wenigstens einen Lichtquelle (02) des Leuchtmittels (01) vorsieht, die mindestens eine OLED (20) im Kaltzustand belassen und ein Warmzustand der mindestens einen OLED (20) zwangsweise unterbunden wird, und
- die bei der Überwachung festgestellte Temperatur den ersten Schwellenwert unterschreitet, die zwangsweise Trennung aufgehoben und die mindestens eine OLED (20) in den überwachten, momentan vorgegebenen Betriebszustand, der einen Warm- oder Kaltzustand der mindestens einen OLED (20) vorsieht, entlassen wird.

8. Verfahren nach einem der voranstehenden Ansprüche, wobei die Bestromung ab Erreichen des zweiten Temperaturschwellenwerts konstant gehalten wird, bis ein dritter Temperaturschwellenwert erreicht ist, bei dem die zwangsweise Trennung der mindestens einen OLED (20) von der Stromversorgung (03) stattfindet.

9. Verfahren nach einem der voranstehenden Ansprüche, wobei zunächst so lange wie möglich ein einer Sollbestromung entsprechender Strom an der OLED (20) anliegt, und die Bestromung immer nur so verringert wird, dass an der OLED (20) konstant eine Maximaltemperatur anliegt, um die OLED so lange wie möglich hell zu halten, ohne den ersten Schwellenwert zu überschreiten.
